# EUROPÄISCHE PATENTANMELDUNG

(11) **EP 1 728 483 A1**
(43) Veröffentlichungstag der Anmeldung: **06.12.2006**
(21) Anmeldenummer: 05011617.7
(22) Anmeldetag: 30.05.2005
(51) Int. Cl.: A61C 1/10, A61C 1/12, A61C 1/14

(54) **Handstück mit Beschichtung für bewegte oder bewegbare Teile**

(71) Anmelder: Kaltenbach & Voigt GmbH, 88400 Biberach (DE)
(72) Erfinder: Hofer, Rainer, 88255 Baienfurt (DE)
(74) Vertreter: Schmidt-Evers, Jürgen

(57) **Zusammenfassung**

Bei einem Handstück (100, 101), welches insbesondere für medizinische, zahnmedizinische oder zahntechnische Zwecke vorgesehen ist und einen Antriebsmechanismus für ein von dem Handstück (100, 101) zu haltendes Werkzeug (12, 105) aufweist, sind bewegte oder bewegbare Teile des Handstücks (100, 101) zumindest teilweise mit einer Beschichtung versehen, welche Chromnitrid und/oder Titan-Nitrid+Gold aufweist.

## Beschreibung

Die vorliegende Erfindung betrifft ein Handstück gemäß dem Oberbegriff des Anspruchs 1, welches einen Antriebsmechanismus für ein von dem Handstück zu haltendes Werkzeug aufweist, wobei bewegte oder bewegbare Teile des Handstücks zumindest teilweise mit einer Beschichtung versehen sind. Insbesondere betrifft die vorliegende Erfindung ein Handstück, welches für medizinische, zahnmedizinische oder zahntechnische Zwecke vorgesehen ist.

Zahnmedizinische oder zahntechnische Handstücke existieren in den verschiedensten Ausführungsformen. Die Handstücke können dabei sowohl nach ihrer Form bzw. Anordnung der zu betreibenden Werkzeuge als auch im Hinblick auf den zum Einsatz kommenden Antriebsmechanismus unterschieden werden. So besteht zum einen die Möglichkeit, das Werkzeug in einem Winkel von etwa 90° zur Längsachse des Handstücks anzuordnen, wobei derartige Konfigurationen beispielsweise bei zahnärztlichen Bohrern zur abhebenden Bearbeitung von Zahnsubstanz eingesetzt werden. In der Zahntechnik hingegen werden zur Herstellung von Zahnersatzteilen häufig Handstücke eingesetzt, bei denen das Werkzeug in Richtung der Längsachse des Handstücks angeordnet ist.

Soll das Werkzeug mit Hilfe des Antriebsmechanismusses in eine Rotation versetzt werden, so kommen in der Zahnmedizin bzw. Zahntechnik im wesentlichen zwei verschiedene Antriebs-Prinzipien zum Einsatz. Zum einen werden häufig Luftturbinen eingesetzt, bei denen ein im Kopfbereich des Handstücks angeordneter Rotor mittels Druckluft in Rotation versetzt wird, zum anderen kommen auch Elektroantriebe zum Einsatz, welche insbesondere dann Vorteile mit sich bringen, wenn eine genaue Steuerung der Drehzahl und des von dem Werkzeug ausgeübten Drehmoments gewünscht ist. Ferner existieren allerdings auch pneumatische Antriebe, die beispielsweise dann zum Einsatz kommen, wenn das Werkzeug nicht in Rotation, sondern in eine oszillierende Bewegung versetzt werden soll.

Allen unterschiedlichen Ausführungsformen zahnmedizinischer oder zahntechnischer Handstücke ist gemeinsam, daß die darin befindlichen bewegten oder bewegbaren Teile einer verhältnismäßig hohen Belastung ausgesetzt sind. Hierbei ist auch zu berücksichtigen, daß es sich überwiegend um miniaturisierte Bauteile handelt, da die beengten Platzverhältnisse innerhalb der Handstücke den Einsatz großvolumiger Bauteile nicht zulassen. Je kleiner allerdings die zum Einsatz kommenden Bauteile sind, desto schwieriger ist für diese, die während des Betriebs bzw. der Benutzung des Handstücks auftretenden Belastungen zu tragen. Komponenten, die einer besonders hohen Belastung ausgesetzt sind, sind beispielsweise sämtliche Bestandteile des Antriebsmechanismusses, welche zur Übertragung einer Rotation auf das Werkzeug bzw. allgemein für eine Bewegung des Werkzeugs verantwortlich sind.

Ein weiterer Bereich eines zahnärztlichen Handstücks, der einer verhältnismäßig hohen Belastung und damit der Gefahr der Abnutzung ausgesetzt ist, ist der Kopfbereich, innerhalb dem das Werkzeug angeordnet ist. Üblicherweise sind Handstücke derart ausgestaltet, daß ein einfacher Wechsel der Werkzeuge ermöglicht ist. Dies ist schon allein deshalb erforderlich, da sich die Werkzeuge im Laufe der Zeit ebenfalls abnutzen sowie aus hygienischen Gründen gereinigt und sterilisiert werden müssen. Es kommen dementsprechend sogenannte Spannvorrichtungen zum Einsatz, welche während des Betriebs das Werkzeug sicher und fest halten und anschließend eine Entnahme des Werkzeugs ermöglichen. Auch die Komponenten einer derartigen Spannvorrichtung sind einer hohen Belastung ausgesetzt, da zum festen und sicheren Halten des Werkzeugs innerhalb der Spannvorrichtung eine hohe Kraftübertragung erforderlich ist.

Um die Abnutzung der verschiedenen Komponenten einer Spannvorrichtung zu reduzieren, wird in der WO 03/071973 A1 vorgeschlagen, die Bestandteile einer Spannvorrichtung eines zahnärztlichen Handstücks mit einer Beschichtung zu versehen, welche Graphit oder Chromnitrat aufweist. Bei der graphit-haltigen Beschichtung wird insbesondere auf sogenannte diamanthaltige bzw. diamantähnliche Hartstoffschichten (diamond like carbon-DLC) verwiesen, welche eine große Härte aufweisen und zusätzlich auch aufgrund des amorphen Kohlenstoffs die Reibungseigenschaften verbessern. Eine weitere Eigenschaft der in der WO 03/071973 A1 beschriebenen Beschichtungen besteht darin, daß diese einer Korrosion der Komponenten der Spannvorrichtung entgegenwirken.

Das Beschichten bestimmter Komponenten eines zahnärztlichen Handstückes ist auch in der WO 2004/056280 A1 beschrieben. Hierbei wird allerdings in erster Linie darauf geachtet, daß die Beschichtung zu einer Reduzierung der Reibungen führt und dementsprechend auf eine übermäßige Schmierung der verschiedenen Handstück-Komponenten verzichtet werden kann. Dementsprechend wird in der WO 2004/056280 A1 vorgeschlagen, zueinander bewegte Teile eines zahnärztlichen Handstücks mit einer Beschichtung zu versehen, welche einen Schmierstoff aufweist.

Als besonders bevorzugtes Ausführungsbeispiel wird wiederum der Einsatz diamantähnlicher Kohlenstoffschichten DLC genannt.

Ausgehend von dem vorstehend beschriebenen Stand der Technik liegt der vorliegenden Erfindung die Aufgabe zugrunde, ein neuartig ausgestaltetes Handstück insbesondere für medizinische, zahnmedizinische oder zahntechnische Zwecke anzugeben, welches im Hinblick auf seine bewegten oder bewegbaren Teile weiter verbesserte Eigenschaften aufweist.

Die Aufgabe wird durch ein Handstück, welches die Merkmale des Anspruchs 1 aufweist, gelöst. Vorteilhafte Weiterbildungen der Erfindung sind Gegenstand der Unteransprüche.

Kerngedanke der vorliegenden Erfindung ist es, bewegte oder bewegbare Teile des Handstücks mit einer Beschichtung aufweisend Chromnitrid (CrN) und/oder Titan-Nitrid+Gold (TiN + Au) zu versehen, um deren Betriebseigenschaften zusätzlich zu verbessern. Im Gegensatz zum Stand der Technik, der den Einsatz von diamantähnlichen Beschichtungen oder Chromnitrat-Schichten vorschlägt, wird gemäß der vorliegenden Erfindung also eine neuartige Beschichtung eingesetzt, da Versuche gezeigt haben, daß Chromnitrid bzw. die Kombination Titan-Nitrid+Gold im Vergleich zu den oben erwähnten Beschichtungen nochmals verbesserte Eigenschaften insbesondere im Hinblick auf die Nutzung im zahnmedizinischen oder zahntechnischen Bereich mit sich bringen. Weitere Vorteile ergeben sich daraus, daß das Beschichten der Komponenten mit Chromnitrid bzw. Titan-Nitrid+Gold mit einer sehr hohen Genauigkeit und insbesondere zuverlässig und reproduzierbar durchgeführt werden kann.

Gemäß der vorliegenden Erfindung wird also ein Handstück mit einem Antriebsmechanismus für ein von dem Handstück zu haltendes Werkzeug, insbesondere für medizinische, zahnmedizinische oder zahntechnische Zwecke vorgeschlagen, wobei bewegte oder bewegbare Teile des Handstücks zumindest teilweise mit einer Beschichtung versehen sind und wobei erfindungsgemäß vorgesehen ist, daß die Beschichtung Chromnitrid und/oder Titan-Nitrid+Gold aufweist.

In einem ersten besonders bevorzugten Ausführungsbeispiel der vorliegenden Erfindung weist das Handstück eine Spannvorrichtung zum wahlweisen Einspannen eines von dem Antriebsmechanismus zu bewegenden, insbesondere in Rotation zu versetzenden Werkzeugs auf, wobei Elemente dieser Spannvorrichtung mit der erfindungsgemäß eingesetzten Chromnitrid-Beschichtung bzw. Titan-Nitrid+Gold-Beschichtung versehen sind. Ein zweites bevorzugtes Ausführungsbeispiel der vorliegenden Erfindung besteht darin, einen Antriebsmechanismus für das Werkzeug einzusetzen, welcher zumindest eine angetriebene und drehbar gelagerte Welle aufweist, wobei Lagerelemente für die Welle und/oder Kupplungsteile zur Rotationsübertragung mit der erfindungsgemäßen Beschichtung versehen sind.

Es handelt sich hierbei um zwei besonders bevorzugte Bereiche bzw. Komponenten des Handstücks, bei denen die erfindungsgemäße Chromnitrid-Beschichtung bzw. Titan-Nitrid+Gold-Beschichtung eingesetzt werden soll. Selbstverständlich können allerdings sämtliche Bauteile des Handstücks, welche einem Verschleiß unterliegen, mit der Beschichtung versehen werden. Die Chromnitrid- bzw. Titan-Nitrid+Gold-Beschichtung ist also sehr vielseitig einsetzbar und trägt in sämtlichen Bereichen dazu bei, die Betriebseigenschaften der beschichteten Bauteile und damit des Handstücks insgesamt zu verbessern.

Die vorliegende Erfindung ist auch keinesfalls auf den Einsatz speziell ausgestalteter Handstücke beschränkt. Vielmehr kann die Chromnitrid- bzw. Titän-Nitrid+Gold-Beschichtung bei sämtlichen Handstücken, die in medizinischen, zahnmedizinischen oder zahntechnischen Bereichen eingesetzt werden, zum Einsatz kommen. Die Betriebseigenschaften sowohl zahnärztlicher Bohrhandstücke als auch gerader Motorhandstücke für den Laborbereich können auf diese Weise weiter optimiert werden.

Nachfolgend soll die Erfindung anhand der beiliegenden Zeichnung näher erläutert werden. Es zeigen:
- Fig. 1: ein erstes Ausführungsbeispiel eines erfindungsgemäßen zahnärztlichen Handstücks in der Seitenansicht;
- Fig. 2: den Kopfbereich des Handstücks von Fig. 1 im vertikalen Schnitt; und
- Fig. 3: und 4 ein weiteres Ausführungsbeispiel eines geraden Motorhandstücks, welches gemäß der vorliegenden Erfindung ausgestaltet ist.

Nachfolgend werden zwei unterschiedliche Handstücke erläutert, welche für den Einsatz im zahnmedizinischen bzw. zahntechnischen Bereich vorgesehen sind und entsprechend der Lehre der vorliegenden Erfindung ausgestaltet sind. Hierbei handelt es sich zum einen um ein Bohrhandstück sowie zum anderen um ein gerades Motorhandstück. Es soll an dieser Stelle allerdings nochmals darauf hingewiesen werden, daß der gemäß der vorliegenden Erfindung vorgesehene Einsatz der Chromnitrid- bzw. Titan-Nitrid+Gold-Beschichtung bei sämtlichen medizinischen, zahnmedizinischen oder zahntechnischen Handstücken Verwendung finden kann.

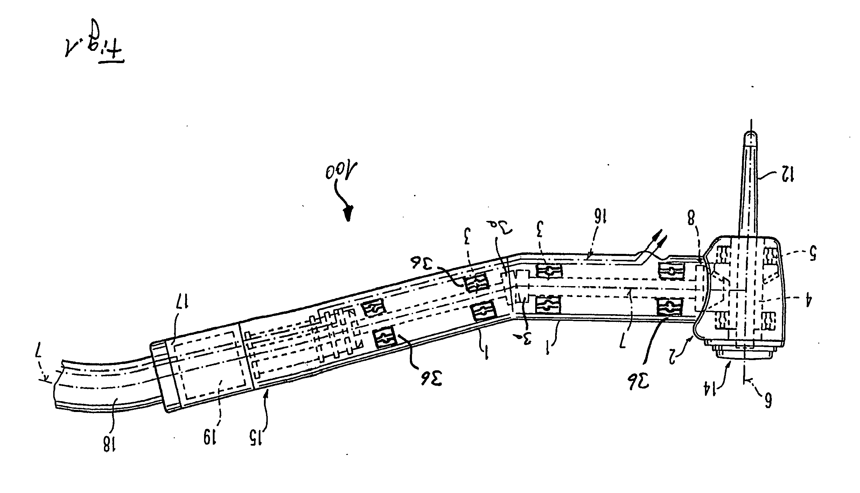

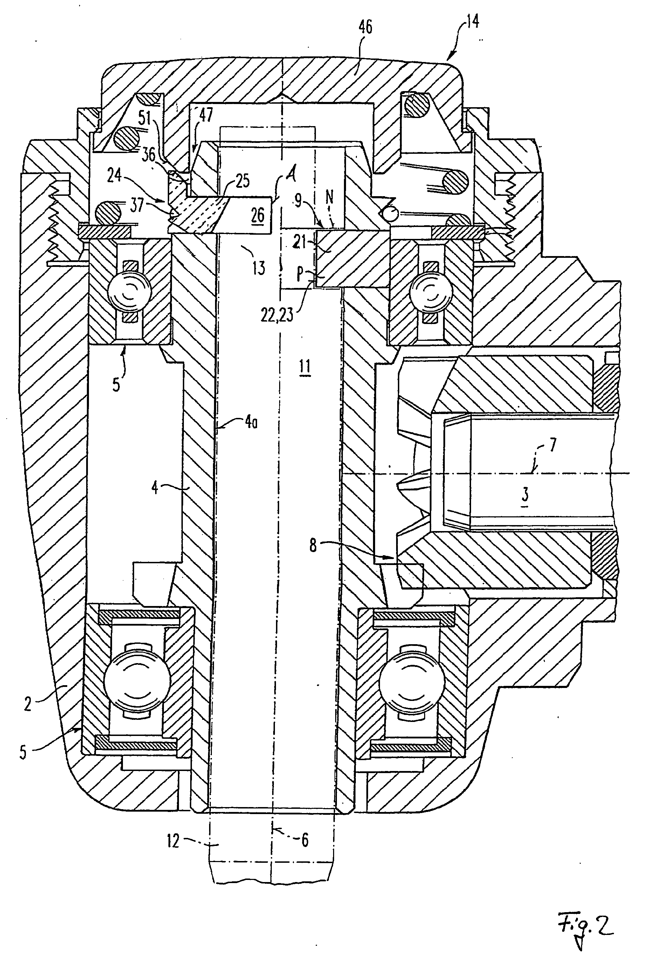

Bei dem in den Fig. 1 und 2 dargestellten Ausführungsbeispiel handelt es sich um ein Handstück, welches aus der DE 196 29 902 A1 der Anmelderin bekannt ist. Da die Ausgestaltung dieses Handstücks in dieser Veröffentlichung bereits hinreichend beschrieben ist, soll dessen Aufbau nachfolgend lediglich kurz erläutert werden.

Die Hauptteile des in den Figuren 1 und 2 dargestellten Handstücks 100 sind eine Griffhülse 1 mit einem Kopfgehäuse 2 an ihrem vorderen Ende, ein zwei Antriebswellen 3 umfassender Antriebswellenabschnitt, der in der Griffhülse 1 mittels entsprechender Lager 3b drehbar gelagert ist, eine Antriebshülse 4, die mittels Drehlagern 5 um eine Drehachse 6 drehbar im Kopfgehäuse 2 gelagert ist, wobei die Drehachse 6 sich vorzugsweise rechtwinklig zur Längsmittelachse 7 der Griffhülse 1 erstreckt, eine Antriebsverbindung zwischen dem Antriebswellenabschnitt und der Antriebshülse 4, hier in Form eines Winkelgetriebes 8 mit entsprechenden Ritzeln, eine erste Kupplung 9, zur lösbaren Drehmitnahmeverbindung eines von aussen in die Antriebshülse 4 einsteckbaren Schaftes 11 eines Rotationswerkzeugs 12, eine zweite Kupplung 13 zur lösbaren axialen Verbindung des Schaftes 11 mit der Antriebshülse 4 und eine Betätigungsvorrichtung 14 zum Lösen der zweiten Kupplung 13 zwecks Entfernung des Werkzeugs 12 aus dem Handstück 100.

Die Griffhülse 1 ist durch eine Steckverbindung 15 mit einem Anschlussstück 17 einer flexiblen Versorgungsleitung 18 verbindbar, deren anderes Ende mit einer nicht dargestellten Versorgungseinrichtung zum Versorgen des Handstücks mit erforderlichen Medien, wie z.B. elektrischer Antriebsenergie, Blasluft, Wasser und/oder Spray verbunden ist. Hierzu dienen sog. Medienleitungen 16, die sich längs durch die Versorgungsleitung 18 und die Steckverbindung 15 erstrecken können, wie es an sich bekannt ist. Die Medienleitungen für Wasser und/oder Luft sowie Licht enden im oder in der Nähe des Kopfgehäuses 2, wobei ihre Austrittsöffnungen auf die sich an der Spitze des Werkzeugs 12 befindlichen Behandlungsstelle gerichtet sind.

Ein elektrischer Antriebsmotor 19 ist in an sich bekannter Weise im Anschlussstück 17 angeordnet. Mit Hilfe des Motors 19 wird das Werkzeug 12 in eine Rotation versetzt, wobei die Übertragung der Motorbewegung auf das Werkzeug 12 über die beiden Wellen 3, an den Wellen 3 befindliche Kupplungselemente 3a sowie das Winkelgetriebe 8 erfolgt.

Die erste Kupplung 9 im Kopfgehäuse 2 ist durch einen inneren Vorsprung 21 in der Antriebshülse 4 mit einer Kupplungsfläche 22 gebildet, die an einer Kupplungsfläche 23 des Schaftes 11 mit geringem Bewegungsspiel anliegt, wobei die Kupplungsfläche 22 durch eine endseitig auslaufende Ausnehmung oder Abflachung des Schaftes 11 gebildet ist. Der innere Vorsprung 21 ist durch ein kreisabschnittsförmiges Kupplungsteil gebildet, das als Passstück in eine Nut N eingesetzt ist.

Die zweite Kupplung 13 zur axial wirksamen Verbindung des Schaftes 11 mit der Antriebshülse 4 ist durch einen Kupplungsschieber 24, der in einem radialen Führungsschlitz der Antriebshülse 4 mit geringem Bewegungsspiel radial verschiebbar gelagert ist, sowie an seinem radial inneren Ende eine Kupplungsnase 25 aufweist, und eine letztere aufnehmende Kupplungsausnehmung 26 im Schaft 11 gebildet.

Der Kupplungsschieber 24 ist zwischen einer in Fig. 2 dargestellten Kupplungsstellung, in der seine Einwärtsbewegung durch einen Anschlag A begrenzt ist und in der die Kupplungsnase 25 in das hohlzylindrische Steckloch 4a der Antriebshülse 4 hineinragt und einer demgegenüber nach aussen verschobenen Entkupplungsstellung oder Freigabestellung verschiebbar, in der die Kupplungsnase 25 nicht in das Steckloch 4a hineinragt. Zur selbsttätigen Rückführung des Kupplungsschiebers 24 in seine Kupplungsstellung ist eine ihn radial nach innen beaufschlagende Feder 37 vorgesehen. Die Feder 37 wird beim Verschieben des Kupplungsschiebers 24 in seine Freigabestellung elastisch geöffnet, was ihre spangenförmige oder C-Form ermöglicht. Durch die federelastische Kontraktion wird das Kupplungsstück 24 selbsttätig wird in seine Kupplungsstellung verschoben.

Zum Lösen der zweiten Kupplung 13 ist die Betätigungsvorrichtung 14 vorgesehen, die auf der dem Werkzeug 12 abgewandten Seite des Kopfgehäuses 2 angeordnet oder von dieser Seite zugänglich ist. Sie weist ein Druckglied 46 auf, das in einer Führung 47 axial zwischen einer nach innen verschobenen Funktionsstellung und einer nach aussen verschobenen Bereitschaftsstellung manuell verschiebbar ist.

Zum Öffnen der Kupplung 13 wird das Druckglied 46 durch Fingerdruck der zugehörigen Bedienungshand eingeschoben, wobei Kegelflächen 36, 51 aufeinander treffen und der Kupplungsschieber 24 radial nach aussen in seine Freigabestellung verdrängt wird und der Schaft 11 aus dem Steckloch 4a herausgezogen werden kann. Das Kuppeln des Schaftes 11 erfolgt beim Einstecken in das Steckloch 4a selbsttätig durch ein Verdrängen des Kupplungsschiebers 24 entgegen der Federkraft und selbsttätiges Einrasten in die Ausnehmung 26 im Schaft 11, die segmentförmig, z. B. als sekantiale Nut, oder ringförmig ausgebildet sein kann.

Das in den Figuren 1 und 2 dargestellte Handstück 100 weist also eine Reihe verschiedenster Bauteile auf, welche während des Betriebs bewegt werden bzw. sich (zueinander) bewegen, um das Werkzeug 12 mit Hilfe des Motors 19 in die gewünschte Rotation zu versetzen. Ferner sind Bauteile oder Komponenten vorgesehen, welche während des Einspannes bzw. Entfernen des Werkzeugs 12 aus dem Kopfbereich 2 bewegt werden, um einen sicheren Griff des Werkzeugs bzw. eine Lösen dieses Griffs zu ermöglichen.

Gemäß der vorliegenden Erfindung ist nunmehr vorgesehen, daß bewegte bzw. bewegbare Teile dieses Handstücks 100 mit einer Chromnitrid-Beschichtung (CrN) und/oder einer Titan-Nitrid+Gold-Beschichtung versehen sind. Es handelt sich hierbei insbesondere um diejenigen Teile, die einer höheren Belastung während des Betriebs ausgesetzt sind, da mit Hilfe der Chromnitrid- bzw. Titan-Nitrid+Gold-Beschichtung die Oberflächen-Eigenschaften dieser Bauteile signifikant verbessert werden können.

So zeichnet sich die erfindungsgemäß eingesetzte Chromnitrid-Beschichtung durch folgende Eigenschaften aus:
a) eine hohe Härte und Haftfestigkeit,
b) eine sehr gute chemische Beständigkeit,
c) eine hohe Temperaturbeständigkeit an Luft,
d) einen sehr geringer Reibungskoeffizient gegenüber Stahl,
e) ein gutes Gleitverhalten bei Mangelschmierung und starker mechanischer Belastung.

Eine weitere positive Eigenschaft der Chromnitrid-Beschichtung besteht darin, daß auch das Aufbringen verhältnismäßig dicker Schichten problemlos möglich ist. Das Aufbringen erfolgt dabei vorzugsweise mittels PVD (Physical Vapour Deposition)-Technik, wobei ohne weiteres Schichtdicken von bis zu 5*µ*m erreicht werden können. Dies bedeutet wiederum, daß durch die Chromnitrid-Beschichtung auch eine zusätzliche Verschleißreserve für die beschichteten Bauteile geschaffen wird, da selbst über einen längeren Nutzungszeitraum hinweg noch eine Beschichtung der betroffenen Bauteile gewährleistet bleibt. In Verbindung mit der hohen Härte sowie einer geringen Sprödigkeit wird hierdurch eine extrem hohe Abriebfestigkeit für die beschichteten Teile erzielt. Da darüber hinaus die Chromnitrid-Beschichtung auch die Korrosionsbeständigkeit der entsprechenden Bauteile erhöht, können deren Betriebseigenschaften also deutlich verbessert werden.

Die alternativ oder ergänzend eingesetzte Titan-Nitrid+Gold-Beschichtung besteht zunächst aus einer Titan-Nitrid-Schicht (TiN), welche von einer Gold-Schicht (Au) überdeckt ist. Die Titan-Nitrid-Schicht weist dabei eine Dicke von bis zu 1*µ*m auf, während hingegen die Gold-Schicht bis zu 0,5µm dick ist. Das Aufbringen der Beschichtung erfolgt mit der PVD-Magnetron-Sputter-Technik, welche ein zuverlässiges und gleichmäßiges Aufbringen der Beschichtung auf die betroffen Bauteile bzw. Komponenten ermöglicht.

Besondere Vorteile der Titan-Nitrid+Gold-Beschichtung sind:
a) eine geringe Gesamt-Schichtdicke von max. 1,5*µ*m,
b) eine signifikante Erhöhung der Verschleißbeständigkeit,
c) eine hohe Mikrooberflächenhärte,
d) eine aufgrund des Gold-Anteils verbesserte Notlaufeigenschaft bei Mangelschmierung,
e) eine signifikante Reduktion der Reibung und Adhäsion zum Gegenkörper sowie
f) eine erhöhte Standzeitverlängerung aufgrund der verbesserten Abriebfestigkeit.

Bei dem in den Fig. 1 und 2 dargestellten Handstück 100 ist dementsprechend vorgesehen, zumindest diejenigen Bauteile zu beschichten, die aufgrund eines Oberflächenkontakts mit anderen Bauteilen einer höheren Belastung während des Betriebs ausgesetzt sind. Hierbei handelt es sich insbesondere um die Wellen 3 des Antriebsmechanismusses bzw. deren Kupplungsteile 3a sowie die Komponenten des Winkelgetriebes 8. Ferner könnten auch die Lagerteile, also die Laufringe der zur Lagerung der Wellen 3 eingesetzten Lager 3b sowie der Lager 5 für die Antriebshülse 4 beschichtet werden. Ein weiteres Einsatzgebiet der erfindungsgemäßen Beschichtung stellen die verschiedenen Bauteile des Mechanismusses zum Einspannen bzw. Einkoppeln des Werkzeugs 12 dar, also die verschiedenen Komponenten der Kupplungen 9 und 11. Alle diese Bauteile sind während des Betriebs des Handstücks 100 einer verhältnismäßig starken Belastung ausgesetzt, da sie im Oberflächenkontakt mit anderen Elementen stehen und Kräfte übertragen. Durch die verhältnismäßig einfach durchzuführende Beschichtung dieser Bauteile mit Chromnitrid und/oder Titan-Nitrid+Gold werden nunmehr deren Eigenschaften im Hinblick auf Abnutzungserscheinungen erhöht, so daß über einen längeren Nutzungszeitraum hinweg ein zuverlässiger und fehlerfreier Betrieb des Handstücks 100 gewährleistet ist.

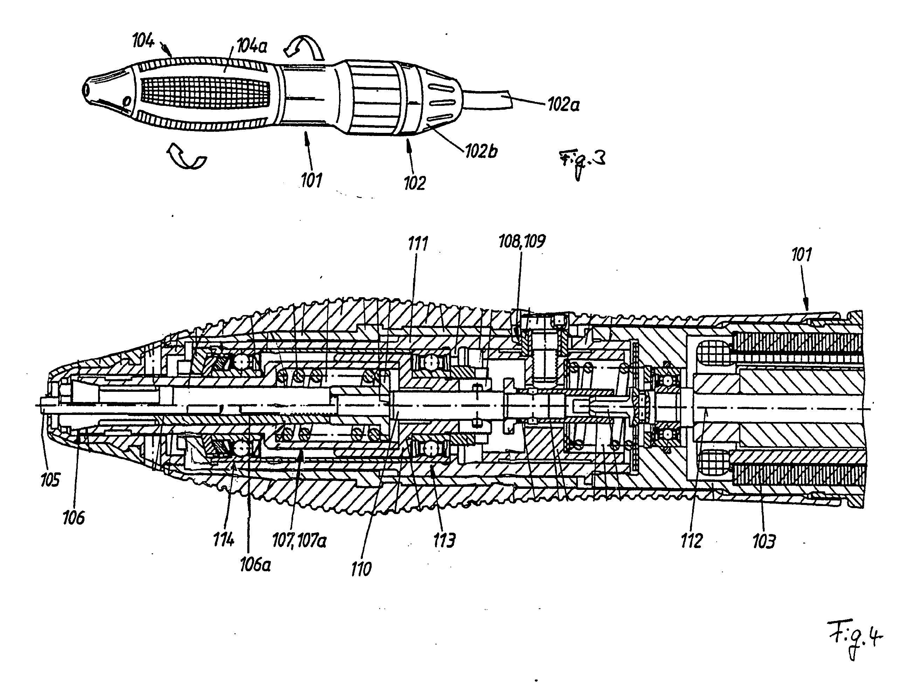

Als zweites Anwendungsbeispiel wird ein gerades Motorhandstück vorgestellt, welches bereits aus der DE 44 06 855 A1 der Anmelderin bekannt ist. Dieses Handstück ist in den Figuren 3 und 4 dargestellt.

Das stabförmige, gerade Handstück 101 besteht aus einem hinteren Motorteil 102 mit einem darin eingebauten, insbesondere elektrischen Antriebsmotor 103 und einem vorderen Handstückteil 104, in das von vorne ein Bearbeitungswerkzeug mit seinem Schaft 105 einspannbar ist. Hierzu dient eine koaxial im Handstückteil 104 angeordnete, hülsenförmige, geschlitzte Spannzange 106, die Teil einer Antriebswelle 107 ist, die koaxial im Handstückteil 104 drehbar gelagert ist und mit dem Antriebsmotor 103 zu ihrer Rotation verbunden ist. Die Spannzange 106 lässt sich durch eine Relativverdrehung zwischen dem Motorteil 102 und einer Griffhülse 104a des Handstückteils 104 öffnen und schliessen. Hierzu ist in das Handstückteil 104 ein Betätigungsmechanismus 108 integriert, der zwischen der Griffhülse 104a und der Antriebswelle 107 wirksam ist und ein Getriebe 109 aufweist, das die Drehbewegung der Griffhülse 104a in eine Axialbewegung einer runden Anzugstange 110 umwandelt, die sich von hinten koaxial durch eine Lagerhülse 107a der Antriebswelle 107 erstreckt, darin axial beweglich in einer Bohrung gelagert ist und mit ihrem vorderen Ende in ein Innengewinde 106a der Spannzange 106 eingeschraubt ist. Die Griffhülse 104a ist auf einem hülsenförmigen Innengehäuse 111 um die Längsmittelachse 112 des Handstücks 101 drehbar und längs verschiebbar gelagert. Im Innengehäuse 111 ist die Antriebswelle 107 mittels zwei einen axialen Abstand voneinander aufweisenden Wälzlagern 113, 114 drehbar gelagert. Das Motorteil 102 ist durch ein Kabel 102a und evtl. ein Anschlussteil 102b an eine Energie-Versorgungsquelle und/oder ein Steuergerät anschliessbar.

Ebenso wie bei dem Ausführungsbeispiel gemäß der Fig. 1 und 2 ist vorgesehen, daß auch bei diesem geraden Motorhandstück 101 die bewegten bzw. bewegbaren Bauteile, welche im Oberflächenkontakt stehen und Kraft übertragen, mit einer Chromnitrid- bzw. Titan-Nitrid+Gold-Beschichtung versehen sind. Es werden in diesem Fall also in erster Linie die Komponenten der verschiedenen Lager 113, 114 sowie die Spannzange 106 zum Einspannen des Werkzeugsschafts 105 beschichtet werden. Wiederum ergeben sich die bereits oben geschilderten Teile.

Abschließend ist nochmals darauf hinzuweisen, dass die Beschichtung mit Chromnitrid und/oder Titan-Nitrid+Gold auf bei anderweitig ausgestalteten Handstücken und Antriebsprinzipien zum Einsatz kommen kann. Insbesondere wäre es bei dem in den Figuren 1 und 2 dargestellten Handstück auch denkbar, eine Luftturbine im Kopfbereich einzusetzen. Auch in diesem Fall wäre die Beschichtung der Lagerteile für die Turbine sowie der Elemente zum Einspannen bzw. Halten des Werkzeugs mit Chromnitrid bzw. Titan-Nitrid+Gold denkbar, da sich auch in diesem Fall die erfindungsgemäß angestrebten Vorteile hinsichtlich der Resistenz gegenüber einer übermäßigen Abnutzung der verschiedenen Komponenten ergeben würden.

Insgesamt bleibt daher festzuhalten, daß durch den erfindungsgemäßen Vorschlag, Bauteile eines Handstücks mit Chromnitrid und/oder Titan-Nitrid+Gold zu beschichten, die Eigenschaften dieser Bauteile und damit des Handstücks insgesamt deutlich verbessert werden können. Dabei besteht ein besonderer Vorteil der vorliegenden Erfindung darin, daß das Beschichten mit Chromnitrid bzw. Titan-Nitrid+Gold verhältnismäßig einfach und in hoher Qualität durchgeführt werden kann, so daß die Erfindung bzw. die damit angestrebten Verbesserungen in einfacher aber zuverlässiger Weise realisiert werden können.

## Patentansprüche

1. Handstück (100, 101), insbesondere für medizinische, zahnmedizinische oder zahntechnische Zwecke, aufweisend einen Antriebsmechanismus für ein von dem Handstück (100, 101) zu haltendes Werkzeug (12, 105), wobei bewegte oder bewegbare Teile des Handstücks (100, 101) zumindest teilweise mit einer Beschichtung versehen sind,
**dadurch gekennzeichnet,**
**dass** die Beschichtung Chromnitrid und/oder Titan-Nitrid+Gold aufweist.

2. Handstück nach Anspruch 1,
**dadurch gekennzeichnet,**
**dass** das Handstück (100, 101) eine Vorrichtung zum wahlweisen Einspannen bzw. Einkoppeln eines von dem Antriebsmechanismus zu bewegenden Werkzeugs (12, 105) aufweist, wobei Elemente dieser Vorrichtung mit der Chromnitrid- bzw. Titan-Nitrid+Gold-Beschichtung versehen sind.

3. Handstück nach Anspruch 2,
**dadurch gekennzeichnet,**
**dass** die Vorrichtung zum Einspannen des Werkzeugs (12, 105) eine Spannzange (106) aufweist.

4. Handstück nach einem der vorhergehenden Ansprüche,
**dadurch gekennzeichnet,**
**dass** das Werkzeug (12, 105) mittels des Antriebsmechanismus in eine Rotation zu versetzen ist.

5. Handstück nach Anstück nach Anspruch 4,
**dadurch gekennzeichnet,**
**dass** der Antriebsmechanismus für das Werkzeug (12, 105) zumindest eine angetriebene und drehbar gelagerte Welle (3, 107) aufweist, wobei Lagerelemente (3a, 113, 114) für die Welle (3, 107) und/oder Kupplungsteile (3b, 8) zur Rotationsübertragung mit der Chromnitrid- bzw. Titan-Nitrid+Gold-Beschichtung versehen sind.

6. Handstück nach einem der vorhergehenden Ansprüche,
**dadurch gekennzeichnet,**
**dass** die Chromnitrid-Beschichtung eine Dicke von bis zu 5*µ*m aufweist.

7. Handstück nach einem der Ansprüche 1 bis 5,
**dadurch gekennzeichnet,**
**dass** die Titan-Nitrid+Gold-Beschichtung eine Dicke von max. 1,5*µ*m aufweist.

8. Handstück nach einem der vorhergehenden Ansprüche,
**dadurch gekennzeichnet,**
**dass** es sich um ein zahnärztliches Bohrhandstück (100) handelt.

9. Handstück nach einem der Ansprüche 1 bis 7,
**dadurch gekennzeichnet,**
**dass** es sich um ein gerades Motorhandstück (101) handelt.
